# EUROPÄISCHE PATENTANMELDUNG

(11) **EP 0 936 300 A1**
(43) Veröffentlichungstag der Anmeldung: **18.08.1999**
(21) Anmeldenummer: 98123550.0
(22) Anmeldetag: 09.12.1998
(51) Int. Cl.: D21D 5/02, D21F 1/06, B01D 29/11, B01D 29/86

(54) **Verfahren zur Reinigung und Zuführung einer Suspension**

(30) Priorität: 11.02.1998 DE 19805448
(71) Anmelder: Voith Sulzer Papiertechnik Patent GmbH, 88191 Ravensburg (DE)
(72) Erfinder: Ketterle, Werner, 88250 Weingarten (DE)

(57) **Zusammenfassung**

Das Verfahren zur Reinigung und Zuführung einer Suspension eignet sich besonders zur Anwendung im Konstanten Teil einer Papiererzeugungsanlage. Es kann angewendet werden, sowohl auf die zur Papiererzeugung gedachte Faserstoffsuspension, als auch auf eventuell partiell zugeführte Verdünnungswasser. Erfindungsgemäß wird bei dem Verfahren ein Drucksortierer verwendet, welcher so gestaltet ist, daß mehrere Gutstofföffnungen (3) die Suspension aus diesem abführen und an separaten Stellen in den Stoffauflauf (14) zuleiten.

## Beschreibung

Die Erfindung bezieht sich auf ein Verfahren gemäß dem Oberbegriff des Anspruchs 1.

Der Anlagenteil, der dem Stoffauflauf einer Papiermaschine unmittelbar vorangestellt ist, wird in der Regel Konstanter Teil genannt. Ein solcher Konstanter Teil umfaßt z.B. eine Mischpumpe für die Faserstoffsuspension sowie verschiedene Reinigungseinrichtungen, die dazu dienen, immer noch enthaltene unerwünschte Bestandteile zu entfernen. In den hier betrachteten Fällen wird auch mindestens ein Drucksortierer verwendet, mit dem es möglich ist, Verunreinigungen aufgrund ihrer Größe (größer als die Fasern) aus der Suspension zu entfernen. Derartige Drucksortierer sind seit langem bekannt und erfüllen ihren Zweck. Im Konstanten Teil werden vor allem durch Pumpen, Cleaner und Sortierer Pulsationen erzeugt, die auf der Papiermaschine zu einer ungleichmäßigen Blattbildung führen können. Es werden bereits verschiedene Verfahren angewendet, um solche Pulsationen zu beseitigen oder wenigstens so zu dämpfen, daß sie nicht mehr schädlich sind. Dazu kann ein Pulsations-Dämpfungsbehälter dienen, wie er etwa aus der DE 26 35 360 bekannt ist.

Wird ein Konstanter Teil bzw. der Stoffauflauf mit dem erwähnten Dämpfungsbehälter ausgestattet, so kõnnen die Pulsationen recht deutlich reduziert werden, wobei dieser Nutzen aber durch einen beträchtlichen Mehraufwand erkauft wird.

In verschiedenen bekannten Papiererzeugungsanlagen wird das an der Papiermaschine anfallende Siebwasser zurückgeführt und zur gezielten Verdünnung der Faserstoffströme verwendet. Dazu wird es - nach einer mehr oder weniger aufwendigen Reinigung - aufgeteilt und so der Faserstoffsuspension zugeleitet, daß diese partiell - d.h. im Bedarfsfall an verschiedenen Stellen - unterschiedlich verdünnt wird. Ein für dieses Verfahren geeigneter Stoffauflauf ist an sich z.B. aus der DE 41 40 657 A1 bekannt. Auch für diese Verdünnungswasserversorgung können die vorgenannten Pulsationsprobleme mit entsprechend schädlicher Wirkung auftreten.

Der Erfindung liegt daher die Aufgabe zugrunde, ein neues Verfahren zur Reinigung der Faserstoffsuspension und/oder der in einzelne Faserstoffsuspensionsströme zugemischten Verdünnungsflüssigkeit zu schaffen, mit dem sich der Konstante Teil wesentlich verbilligen läßt, ohne daß störende Pulsationen in den nachfolgenden Stoffauflauf gelangen.

Diese Aufgabe wird durch die im Kennzeichen des Anspruchs 1 genannten Maßnahmen vollständig erfüllt.

Mit Hilfe des erfindungsgemäßen Verfahrens ist es möglich, mehrere Funktionen in einem Gerät zusammenzufassen. So können nicht nur die sortierbaren Verunreinigungen aus der Suspension entfernt werden, ohne störende Pulsationen zu erzeugen, sondern außerdem eventuell bereits vorhandene Pulsationen abgebaut werden; die Verteilung der Suspension über die Breite des Stoffauflaufes wird wesentlich vereinfacht. Letzteres gelingt deshalb mit besonderem Vorteil, da die z.B. radial am Umfang des Drucksortierers zueinander angeordneten Gutstofföffnungen direkt mit entsprechenden Teilen des Stoffauflaufes verbunden sind.

Zwar ist aus der DE 40 05 281 C2 ein Zentralverteiler bekannt, aus dem die Faserstoffsuspension zentral heraus- und abschnittsweise dem Stoffauflauf zugeleitet wird, jedoch führt diese Maschine zu einem zusätzlichen Bauaufwand, da sie keine Sortierfunktionen erfüllen kann. Vielmehr ist ein separater Drucksortierer erforderlich.

In der CH 586 074 wird ein Sortierer für Faserstoffsuspensionen beschrieben, mit welchem zwar mit Hilfe eines Druckpolsters Dämpfung und Sortierung kombiniert werden sollen, aber der Stoffauflauf einen relativ aufwendigen Querstromverteiler benötigt, da ihm die Suspension in einer großen Stoffleitung seitlich zugeführt wird.

Die Erfindung wird erläutert und erklärt anhand von Zeichnungen. Dabei zeigen:
- Fig. 1: Eine Anlage zur Durchführung des Verfahrens (schematisch);
- Fig. 2: einen Drucksortierer, der zur Ausführung des Verfahrens geeignet ist;
- Fig. 3 bis 6: jeweils Varianten von Drucksortierem, die zur Ausführung des Verfahrens geeignet sind;
- Fig. 7: schematisch: Anwendung des Verfahrens sowohl auf Faserstoffsuspension als auch auf Verdünnungswasser;
- Fig. 8: einen pulsationsarmen Rotor;
- Fig. 9: Aufsicht des in Fig. 9 gezeigten Gegenstandes;
- Fig. 10 und 11: zwei weitere Varianten in Form von einfachen erfindungsgemäßen Drucksortierem;
- Fig. 12: Drucksortierer mit unsymmetrischem Gutstoffraum.

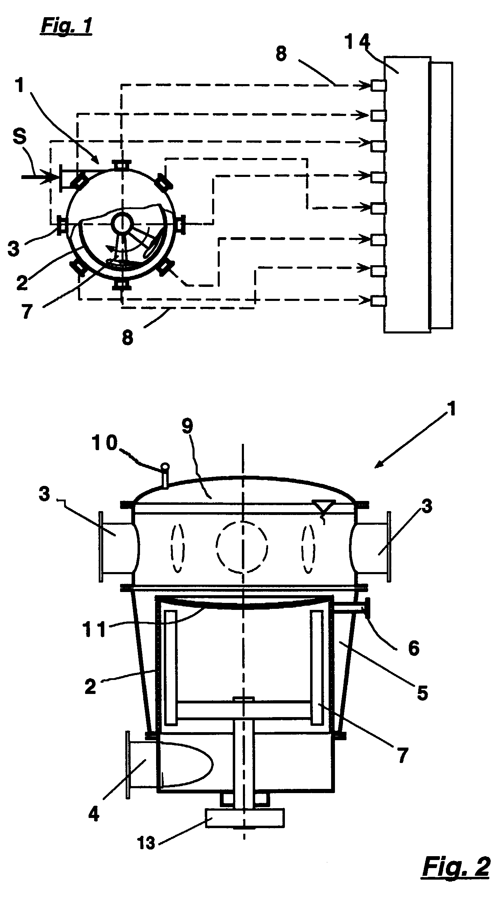

Fig. 1 zeigt schematisch das Wesen des erfindungsgemäßen Verfahrens. Man sieht einen Drucksortierer 1 in Ansicht von oben (nur angedeutet), in den die Suspension S hineingeführt wird. Er weist an seinem Umfang eine Anzahl von Gutstofföffnungen 3 auf, durch die die gereinigte Suspension aus dem Gehäuse des Drucksortierers austritt, die dann durch gestrichelt angedeutete Leitungen 8 zum Stoffauflauf 14 einer Papiermaschine geführt wird. Da der Deckel des Drucksortierers 1 durchbrochen gezeichnet ist, sind sowohl das Siebelement 2 als auch der Räumer 7 teilweise sichtbar. Die Leitungen 8 zwischen den Gutstofföffnungen 3 und dem Stoffauflauf 14 können z.B. aus elastischen Schläuchen bestehen, damit eventuell noch vorhandene restliche Pulsationen gedämpft werden. Es ist auch in vielen Fällen von Vorteil, wenn dafür Sorge getragen wird, daß die einzelnen Leitungen 8 jeweils etwa die gleiche Länge haben. Die Leitungen münden in den Stoffauflauf 14 an verschiedenen Stellen, wobei diese Mündungsstellen über die Breite des Stoffauflaufes gleichmäßig verteilt sind. Dadurch wird erreicht, daß im Stoffauflauf nur geringe Querströmungen auftreten, um die Suspension gleichmäßig zu verteilen. Wie bereits erwähnt, kann in aller Regel bei einer derartigen Zuführung der Faserstoffsuspension ein aufwendiger Querstromverteiler entfallen.

Die Fig. 2 zeigt exemplarisch einen für das erfindungsgemäße Verfahren geeigneten Drucksortierer 1, und zwar in der Form eines Vertikalsortierers mit zylindrischem Siebelement 2. Die Suspension wird durch den Einlaufstutzen 4 in das Gehäuse hinein- und zur Zulaufseite des Siebelementes 2 hingeleitet. Dieses wird durch einen Räumer 7, welcher sich in der Nähe der zulaufseitigen Oberfläche des Siebelementes relativ zu diesem bewegt, von Verstopfungen frei gehalten. Der Räumer 7 gehört zu einem Rotor, der mit einem - hier nur angedeuteten - Antrieb 13 versehen ist. Ein großer Teil der Suspension ist in der Lage, die Sieböffnungen des Siebelementes 2 zu passieren und gelangt dann in den zentral außerhalb des Siebelementes liegenden ringförmigen Gutstoffraum 5. Dieser verbreitert sich, in Axialflußrichtung der Suspension gesehen. Dadurch wird dem Rechnung getragen, daß auf diesem Wege ständig Suspension durch das Siebelement 2 in den Gutstoffraum 5 nachströmt, daß also die Axialströmung der Suspension oben einen größeren Volumenstrom umfaßt als weiter unten. Große Unterschiede in der Strömungageschwindigkeit werden vermieden. Diese Maßnahme ist von Vorteil, aber nicht immer erforderlich. Der Gutstoffraum 5 ist gegenüber den anderen Bereichen des Sortierers abgedichtet und steht mit dem Einlaufstutzen 4 strömungsmäßig nur über das Siebelement 2 in Verbindung. Gegenüber dem Innenvolumen des Siebelementes 2 ist er durch eine - hier gewölbte - Oberwand 11 abgeteilt.

Das am Siebelement 2 Abgewiesene, also der Rejekt, wird durch die Spuckstoffleitung 6 aus dem Drucksortierer entfernt. Der Gutstoffraum 5 setzt sich oberhalb des Siebelementes 2 fort. Aus diesem Bereich kann die gereinigte Suspension durch eine Anzahl von mehreren bevorzugt auf gleicher Höhe liegenden Gutstofföffnungen 3 abgeführt werden. Der Gutstoffraum 5 wird darüber mit einem Gaspolster 9 abgeschlossen, welches durch eine Gaszuführungseinrichtung 10 gespeist und geregelt werden kann. Ein solches Gaspolster ist zwar nicht in allen Fällen notwendig, der Aufwand hierfür ist aber gering. Es ist sehr gut geeignet, eventuell noch vorhandene Pulsationen im Gutstoffraum abzubauen. Die pulsationsdämpfende Wirkung ist jedoch nicht allein auf das Gaspolster beschränkt, sondern fällt bereits beim Durchtritt der Suspension durch das Siebelement 2 an, da dort ein beträchtlicher Druckabfall stattfindet. Die Kombination von Druckabfall im Siebblech, Vereinzelung der Stoffströme durch die Sieböffnungen und Elastizität des Gaspolsters bringt eine sehr gute Dämpfungswirkung.

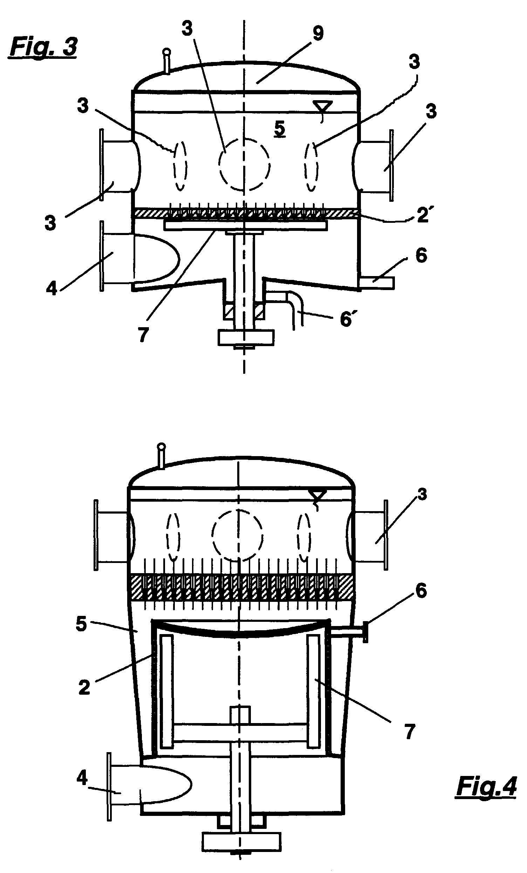

Es ist ohne weiteres möglich, bei der Durchführung des erfindungsgemäßen Verfahrens einen Drucksortierer zu verwenden, welcher mit einer ebenen Lochplatte als Siebelement versehen ist. Einen solchen Apparat zeigt die Fig. 3. Bei diesem tritt die Suspension wiederum unten durch den Einlaufstutzen 4 ein, durch das Siebelement 2' hindurch und wird so in den Gutstoffraum 5 geführt. Über diesem Gutstoffraum befindet sich das Gaspolster 9. Auch auf diese Weise kann die Suspension sowohl gereinigt als auch pulsationsarm durch die Gutstofföffnungen 3 weitergeleitet werden. Für das am Siebelement 2' Abgewiesene sind in dem hier gezeigten Falle zwei Spuckstoffleitungen 6 und 6' eingezeichnet. Die radial innenliegende Spuckstoffleitung 6' eignet sich besonders für abgewiesene Leichtstoffe, während sich in der radial außenliegenden Spuckstoffleitung 6 eher die schwereren Bestandteile des abgewiesenen Rejektes ausführen lassen.

Bei bestimmten Anforderungen kann auch eine noch wirksamere Pulsationsdämpfung gewünscht sein, die z. B. gemäß Fig. 4 durch eine stromabwärts zum Siebelernent 2 liegende Stufendiffusor-Lochplatte 15 erreicht wird. Sie weist Bohrungen auf, die sich in Strömungsrichtung sprunghaft erweitern. Ihr kleinster Durchmesser ist so gewählt, daß nicht vorher aussortierte Feststoffteile, z.B. Fasern, sicher hindurchpassen, also nicht abgewiesen werden. Der Teil des Gutstoffraumes 5, von dem die Gutstoffleitungen 3 abgehen, befindet sich oberhalb der Stufendiffusor-Lochplatte 15. Dabei weist dieser Drucksortierer vier Gutstofföffnungen auf, welche axial auf unterschiedlicher Höhe liegen. Diese Anordnung kann auch bei anderen erfindungsgemäßen Sortierern zweckmäßig sein.

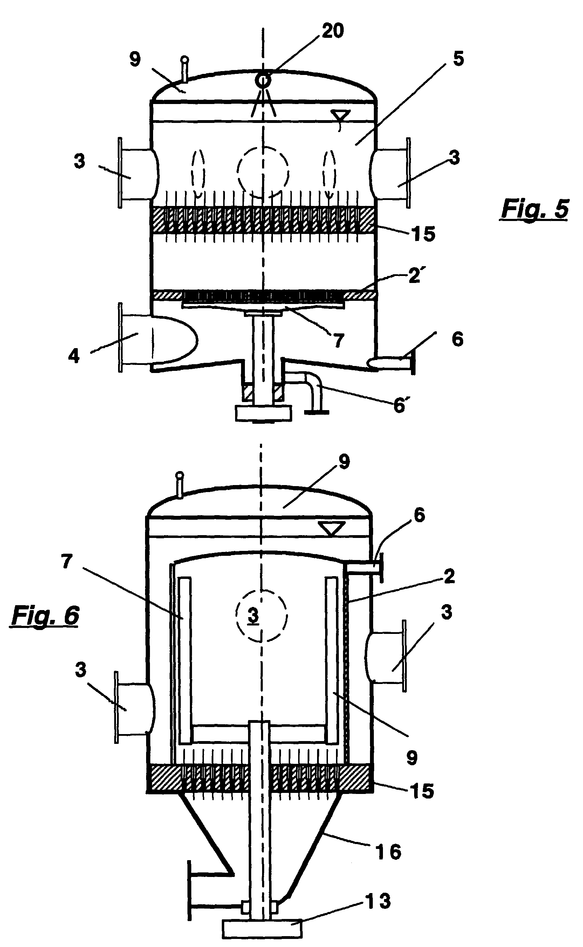

Eine Kombination von ebenem Siebelement 2' und einer diesem ebenfalls nachgeschalteten Stufendiffusor-Lochplatte 15 zeigt Fig. 5. Ein so aufgebauter Drucksortierer dürfte bezüglich der pulsationsdämpfenden Wirkung zwar vorteilhaft sein, insbesondere mit einem darüberliegenden Gaspolster 9; es ist jedoch nicht immer leicht, eine genügend große Siebfläche in einem solchen Gerät unterzubringen. An diesem Beispiel ist eine obenliegende Sprüheinrichtung 20 gezeichnet, wie sie auch bei anderen Drucksortierern mit Gaspolster sinnvoll sein kann.

Bei dem in Fig. 6 gezeigten Drucksortierer werden eventuell ankommende Pulsationen durch eine stromaufwärts zum Siebelement 2 liegende Stufendiffusor-Lochplatte 15 gedämpft. Außerdem wird hier die Strömung der Suspension mit Hilfe eines diffusorförmigen Zulaufteiles 16 vor der Stufendiffusor-Lochplatte 15 gleichgerichtet. Eine so angeordnete Lochplatte muß Öffnungen aufweisen, an denen auch die Verunreinigungen nicht abgewiesen werden. Die Lösung vereinfacht zwar den Aufbau des Drucksortierers, ist aber nur in speziellen Fällen zweckmäßig, z.B. bei relativ sauberen Suspensionen mit starken Eingangs-Pulsationen Das Siebelement 2 ist ein Schlitzsiebkorb. Die Wahl, ob Schlitz- oder Lochsieb hängt vom Einsatzfall ab. Das hier zylindrisch gezeichnete Gehäuse kann mit Vorteil im Bereich des Gutstoffraumes 5 konisch sein.

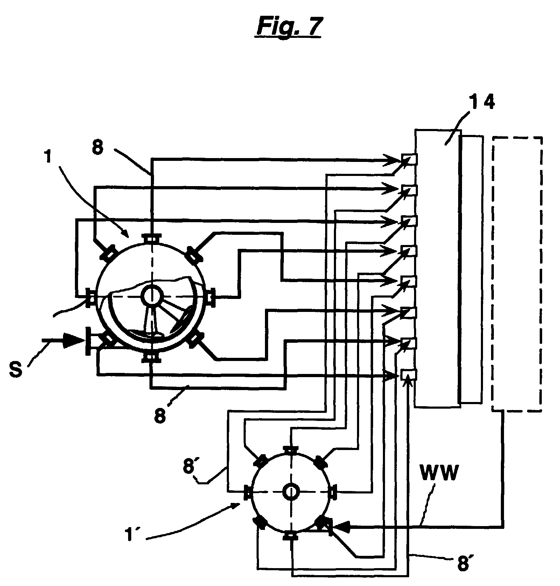

Bei den bereits beschriebenen Stoffaufläufen, die mit einer partiellen Verdünnung durch z.B. Wasser oder eine stoffärmere Flüssigkeit betrieben werden, können sowohl die zur Papiererzeugung benötigte Faserstoffsuspension als auch das Verdünnungswasser unter Benutzung des erfindungsgemäßen Verfahrens gereinigt und pulsationsfrei bzw. pulsationsarm dem Stoffauflauf zugeführt werden. Eine solche Kombination zeigt die Fig. 7. Zusätzlich zu dem bereits in Fig. 1 dargestellten Fall der Reinigung und Weiterführung der Stoffsuspension S zeigt dieses Schema auch einen zweiten Drucksortierer 1', der im Prinzip ähnlich aufgebaut sein kann. Wegen der geringeren Menge und der geringeren Schmutzstoff-Fracht kann ein solcher Apparat in der Regel sehr viel kleiner sein als der oben erwähnte Drucksortierer 1 für die Faserstoffsuspension. Lediglich angedeutet ist der Bereich der Papiermaschine, aus dem das Siebwasser WW abgezogen und in den zweiten Drucksortierer 1' eingeleitet wird.

Da die Bewegung des Räumers auch eine Quelle von Pulsationen sein kann, gibt es bereits spezielle Entwicklungen, bei denen dieser Nachteil nicht besteht oder wenigstens herabgesetzt ist.

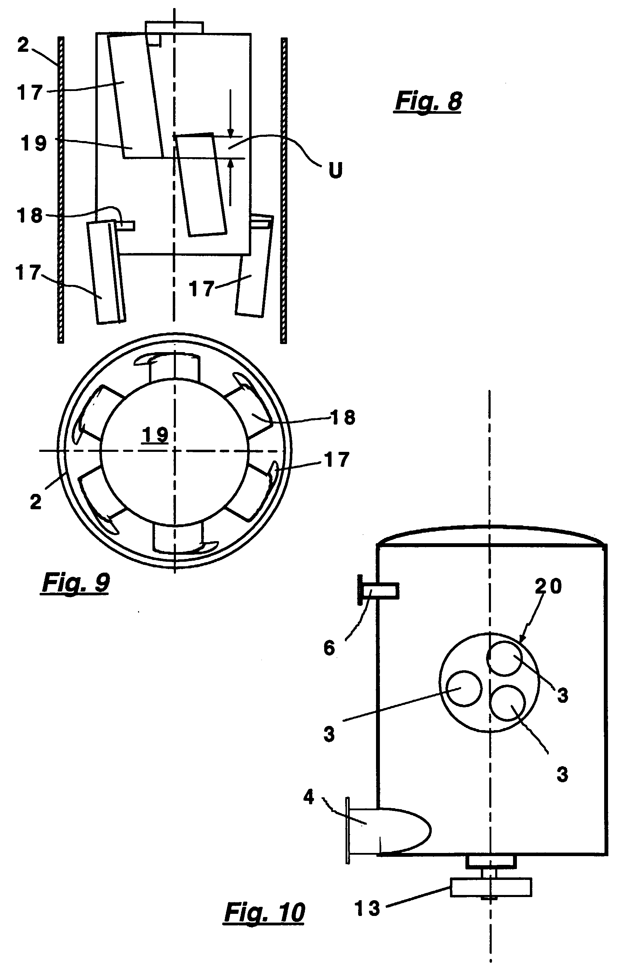

Fig. 8 zeigt einen Rotor zum Räumen eines zylindrischen Siebelementes 2, in dem er konzentrisch montiert ist. Er weist eine größere Anzahl von Flügeln 17 auf, die über Stege 18 mit der Rotornabe 19 verbunden sind. Die Flügel 17 haben ein Strömungsprofil, das gleichmäßige hydraulische Impulse erzeugt. Es ist von Vorteil, möglichst viele Flügel an einem Rotor zu verwenden (18 bis 36 Stück), diese schräg gegen die Achsrichtung zu stellen und sie eventuell in axialer Richtung zu unterbrechen. In ihrer axialen Anordnung sollten sie sich überlappen, was durch Überlappung U gezeichnet ist. Ein Beispiel ist z.B. aus der DE 29 30 475 C2 bekannt. Wichtig ist auch, daß die Flügel sich an der Zulaufseite des Siebelementes befinden, weil die von ihnen erzeugten Druckimpulse beim Druckabfall im Sieb gedrosselt werden.

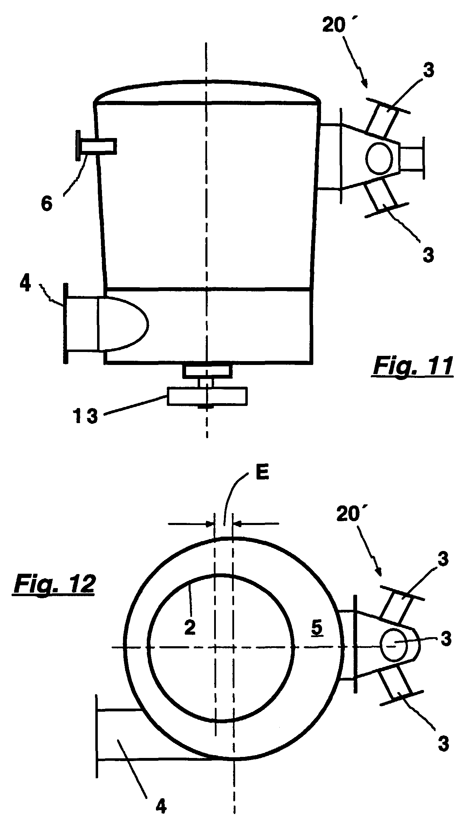

In Fig. 9 ist dieselbe Rotor/Sieb-Kombination in Aufsicht dargestellt.

Beim Drucksortierer in Fig. 10 sind drei Gutstofföffnungen 3 an einem Gutstoffanschluß 20 zusammengefasst. Das verbilligt die Vorrichtung. Dabei kann es sich um einen Blindflansch handeln, wie hier gezeigt, oder um ein konisches Rohr wie beim Gutstoffanschluß 20' gemäß Fig. 11. Auch andere Mittel zur gleichmäßigen Aufteilung der Gutstoffströmung sind anwendbar. Es können auch mehrere solcher Gutstoffanschlüsse sein, die am Gehauseumfang verteilt sind. Diese Art eignet sich auch zum Umbau von konventionellen Drucksortierern.

Werden die Drucksortierer nicht mit gleichmäßig am Umfang verteilten Gutstofföffnungen 3 versehen, sondern - wie die Fig. 10 und 11 zeigen - mit einem Gutstoffanschluß 20 bzw. 20', auf dem sich mehrere Gutstofföffnungen 3 befinden, kann es zu einem unsymmetrischen Strömungsverlauf im Gutstoffraum kommen. In solchen Fällen ist es von Vorteil, wenn - wie an sich bekannt - der Gutstoffraum in der Weise unsymmetrisch gestaltet wird, daß sich diese Ungleichheiten wieder ausgleichen lassen. Vorzugsweise wird man bei Vorhandensein eines einzigen Gutstoffanschlusses den Gutstoffraum 5 als Ringraum mit exzentrisch eingesetzten Siebkorb ausgestalten, also dessen Mitte um die Exzentrizität E relativ zur Mitte des Gehäuses vom Gutstoffanschluß 20 bzw. 20' weg versetzen. Exemplarisch ist das in Fig. 12 dargestellt. Auf diese Weise differieren die Strömungsgeschwindigkeiten nur noch in engen Grenzen. Weniger erforderlich sind solche Maßnahmen, wenn - wie die Fig. 2 bis 5 zeigen - die Gutstoffströmung zunächst aus dem Siebbereich wegführt und in einen Teil des Gutstoffraumes gelangt, der am Umfang gleichmäßig verteilte Gutstofföffnungen 3 hat.

Die hier gezeichneten und erläuterten Drucksortierer sind nur als geeignete Beispiele anzusehen. Insbesondere sind Merkmalskombinationen möglich:
- mit/ohne Gaspolster;
- mit/ohne Stufendiffusor-Lochplatte;
- ebenes /zylindrisches Sieb;
- zentraler/tangentialer/radialer Suspensionseinlauf;
- Loch/Schlitz-Siebelement.

## Patentansprüche

1. Verfahren zur Reinigung und Zuführung einer Suspension (S), insbesondere unmittelbar vor Eintritt in den Stoffauflauf einer Papiermaschine,
wobei die Suspension (S) unter Überdruck in einen Drucksortierer (1,1') geleitet wird,
in welchem sich mindestens ein Siebelement (2,2') befindet,
durch dessen Sieböffnungen die gereinigte Suspension gepumpt wird,
anschließend in einem Gutstoffraum (5) gesammelt und durch mindestens eine Gutstofföffnung (3) aus dem Drucksortierer (1,1') abgeleitet wird,
während die an den Sieböffnungen zurückgehaltenen Störstoffe durch mindestens eine Spuckstofföffnung (6,6') aus dem Drucksortierer (1,1') entfernt werden,
**dadurch gekennzeichnet**,
daß mindestens drei Gutatofföffnungen (3) vorhanden sind und
daß die aus den Gutstofföffnungen (3) abgeführten Suspensionsströme einzeln an verschiedenen Stellen in den Stoffauflauf (14) eingeleitet werden.

2. Verfahren nach Anspruch 1,
**dadurch gekennzeichnet**,
daß mindestens sechs Gutstofföffnungen (3) vorhanden sind.

3. Verfahren nach Anspruch 1 oder 2,
**dadurch gekennzeichnet**,
daß der Drucksortierer (1, 1') einen im wesentlichen zylindrischen Teil aufweist und daß die Gutstofföffnungen (3) an dessen Umfang in Umfangsrichtung verteilt sind

4. Verfahren nach Anspruch 1, 2 oder 3,
**dadurch gekennzeichnet**,
daß benachbarte Gutstofföffnungen (3) zueinander in gleichen Winkelabständen angeordnet sind.

5. Verfahren nach Anspruch 1, 2, 3 oder 4,
**dadurch gekennzeichnet**,
daß ein Gaspolster (9) gebildet wird, das mit dem Gutstoffraum (5) in Verbindung steht.

6. Verfahren nach Anspruch 5,
**dadurch gekennzeichnet**,
daß der Druck des Gaspolsters (9) geregelt wird.

7. Verfahren nach Anspruch 1, 2, 3, 4, 5 oder 6,
**dadurch gekennzeichnet**,
daß zwischen den Gutstofföffnungen (3) und dem Stoffauflauf (14) der Papiermaschine Leitungen (8, 8') mit elastischen, pulsations-absorbierenden Wänden verwendet werden.

8. Verfahren nach einem der voranstehenden Ansprüche,
**dadurch gekennzeichnet**,
daß das Siebelement (2, 2') durch mindestens einen an der Zulaufseite des Siebelementes und relativ dazu bewegte Räumer (7) von Verstopfungen freigehalten wird.

9. Verfahren nach Anspruch 8,
**dadurch gekennzeichnet**,
daß der Räumer (7) relativ schwache Pulsationen erzeugt.

10. Verfahren nach Anspruch 9,
**dadurch gekennzeichnet**,
daß der Räumer (7) mit Flügeln (17) vergehen ist.

11. Verfahren nach Anspruch 10,
**dadurch gekennzeichnet**,
daß quer zur Bewegungsrichtung des Räumers (7) mehrere Flügel (17) vorhanden sind.

12. Verfahren nach Anspruch 10 oder 11,
**dadurch gekennzeichnet**,
daß die Flügel (17) relativ zur Bewegungsrichtung schräg gestellt werden.

13. Verfahren nach Anspruch 10, 11 oder 12,
**dadurch gekennzeichnet**,
daß ein Räumer mit mindestens 9 Flügeln (17) verwendet wird.

14. Verfahren nach Anspruch 10, 11, 12 oder 13,
**dadurch gekennzeichnet**,
daß die Flügel sich in axialer Richtung überlappen.

15. Verfahren nach einem der voranstehenden Ansprüche,
**dadurch gekennzeichnet**,
daß die Sieböffnungen Löcher mit einem minimalen Durchmesser zwischen 0,8 und 4 mm sind.

16. Verfahren nach einem der Ansprüche 1 bis 14,
**dadurch gekennzeichnet**,
daß die Sieböffnungen Schlitze sind mit einer Weite zwischen 0,1 und 1,0 mm.

17. Verfahren nach Anspruch 15 oder 16,
**dadurch gekennzeichnet**,
daß sich die Sieböffnungen in Durchströmungsrichtung erweitern.

18. Verfahren nach Anspruch 17,
**dadurch gekennzeichnet**,
daß die Erweiterung in Form eines Stufensprungs erfolgt.

19. Verfahren nach Anspruch 16, 17 oder 18,
**dadurch gekennzeichnet**,
daß das Siebelement (2, 2') auf der Zulaufseite eine profilierte Oberfläche hat.

20. Verfahren nach einem der voranstehenden Ansprüche,
**dadurch gekennzeichnet**,
daß das Siebelement (2) ein zylindrischer Siebkorb ist.

21. Verfahren nach Anspruch 20,
**dadurch gekennzeichnet**,
daß der Gutstoffraum (5) zentral außerhalb des Siebkorbes gelegen ist.

22. Verfahren nach einem der Ansprüche 1 bis 19,
**dadurch gekennzeichnet**,
daß das Siebelement (2) eine ebene Siebplatte ist.

23. Verfahren nach einem der voranstehenden Ansprüche,
**dadurch gekennzeichnet**,
daß die Suspension nach dem Passieren des Siebelementes (2, 2') durch eine Stufendiffusor-Lochplatte (15) geführt wird, bevor sie zu den Gutstofföffnungen (3) gelangt.

24. Verfahren nach einem der voranstehenden Ansprüche,
**dadurch gekennzeichnet**,
daß die Suspension vor dem Passieren des Siebelementes (2, 2') durch eine Stufendiffusor-Lochplatte (15) geführt wird.

25. Verfahren nach einem der voranstehenden Ansprüche,
**dadurch gekennzeichnet**,
daß die Suspension nach dem Passieren des Siebelementes (2, 2') nur noch mit polierten Flächen in Berührung kommt, bis sie aus dem Drucksortierer (1, 1') austritt.

26. Verfahren nach einem der voranstehenden Ansprüche,
**dadurch gekennzeichnet**,
daß die zu reinigende Suspension (S) die Faserstoffsuspension ist, aus der auf der Papiermaschine das Papier erzeugt werden soll.

27. Verfahren nach Anspruch 26,
**dadurch gekennzeichnet**,
daß in die aus den Gutstofföffnungen (3) abgeführten Suspensionsströme Verdünnungsflüssigkeit eingeführt wird, welche für die verschiedenen Suspensionsströme individuell dosiert wird.

28. Verfahren nach einem der voranstehenden Ansprüche,
**dadurch gekennzeichnet**,
daß die zu reinigende Suspension zumindest teilweise aus dem an der Papiermaschine anfallenden Siebwasser (WW) besteht und im Laufe des Verfahrens als Verdünnungsflüssigkeit für die zur Papiererzeugung vorgesehene Faserstoffsuspension verwendet wird.

29. Drucksortierer (1, 1') zur Durchführung des Verfahrens nach einem der voranstehenden Ansprüche mit einem Gehause, welches Zu- und Ablauföffnungen für die Suspensionsströme und den gebildeten Rejekt aufweist,
mit einem zylindrischen Siebkorb sowie einem relativ zum Siebkorb bewegbaren Siebräumer₁
mit einem Gutstoffraum (5), der von der Zulauföffnung durch den Siebkorb getrennt ist,
**dadurch gekennzeichnet**,
daß aus dem Gutstoffraum (5) mindestens drei Gutstofföffnungen (3) fur die im Drucksortierer (1, 1') gereinigte Suspension herausführen, welche

30. Drucksortierer nach Anspruch 29,
**dadurch gekennzeichnet**,
daß das Gehäsue zumindest teilweise zylindrisch ist und daß die mindestens drei Gutstofföffnungen (3) am zylindrischen Teil des Gehäuses außen und in Umfangsrichtung gleichmäßig verteilt angeordnet sind.

31. Drucksortierer nach Anspruch 29,
**dadurch gekennzeichnet**,
daß die mindestens drei Gutstofföffnungen (3) über einen Gutstoffanschluß (20, 20') mit dem Gutstoffraum (5) verbunden sind und daß der Siebkorb exzentrisch im Gehäuse angeordnet ist, wobei die Exzentrizität (E) weg vom Gutstoffanschluß (20, 20') gerichtet ist.

32. Drucksortierer nach Anspruch 31,
**dadurch gekennzeichnet**,
daß die Exzentrizität (E) mindestens 5 % des Siebkorbdurchmessers ist.

33. Drucksortierer nach Anspruch 29, 30, 31 oder 32,
**dadurch gekennzeichnet**,
daß sich im Gehäuse ein Volumen befindet, welches mit dem Gutstoffraum (5) in Verbindung steht und im Betriebszustand mit Luft gefüllt ist.

34. Drucksortierer nach Anspruch 29, 30, 31 oder 32,
**dadurch gekennzeichnet**,
daß sich im Gehäuse ein Volumen befindet, welches im Betriebszustand mit Luft gefüllt ist und vom übrigen Gutstoffraum (5) durch eine Membran getrennt ist.

35. Drucksortierer nach einem der Ansprüche 29 bis 34,
**dadurch gekennzeichnet**,
daß sich der axiale Strömungsquerschnitt des Gutstoffraumes (5) in Richtung zu den Gutstfföffnungen (3) erweitert.

36. Drucksortierer nach Anspruch 35,
**dadurch gekennzeichnet**,
daß die Erweiterung des Gutstoffraumes (5) stetig ist.
